# EUROPÄISCHE PATENTSCHRIFT

(11) **EP 3 959 569 B1**
(45) Veröffentlichungstag und Bekanntmachung des Hinweises auf die Patenterteilung: **08.11.2023**
(21) Anmeldenummer: 20719628.8
(22) Anmeldetag: 16.04.2020
(51) Int. Cl.: G05B 19/05, G05B 19/042

(54) **STEUERUNGSANORDNUNG EINES AUTOMATISIERUNGSSYSTEMS UND PRÜFVERFAHREN DAFÜR**
CONTROL ASSEMBLY OF AN AUTOMATION SYSTEM, AND TEST METHOD THEREFOR
ENSEMBLE DE COMMANDE D'UN SYSTÈME D'AUTOMATISATION ET PROCÉDÉ DE CONTRÔLE ASSOCIÉ

(30) Priorität: 24.04.2019 DE 102019110625
(43) Veröffentlichungstag der Anmeldung: 02.03.2022
(73) Patentinhaber: PHOENIX CONTACT GMBH & CO. KG, 32825 Blomberg (DE)
(72) Erfinder: BENK, Stefan, 31812 Bad Pyrmont (DE)
(74) Vertreter: Blumbach · Zinngrebe Patentanwälte PartG mbB
(86) Internationale Anmeldenummer: PCT/EP2020/060724
(87) Internationale Veröffentlichungsnummer: WO 2020/216672

(56) Entgegenhaltungen:
- JP-A- 2011 081 661
- JP-B2- 3 161 487
- KR-A- 20160 074 908
- US-A1- 2011 022 186

## Beschreibung

Die vorliegende Erfindung betrifft eine Steuerungsanordnung eines Automatisierungssystems, mit einem Steuerungs- und/oder Kommunikationsmodul und wenigstens zwei E/A-Modulen, die in einer Reihe angeordnet sind, sowie ein Prüfverfahren für eine solche Steuerungsanordnung.

Bei der Konfiguration, Montage und Verdrahtung von E/A-Modulen (Eingabe- /Ausgabe-Modulen) einer Steuerungsanordnung eines Automatisierungssystems, insbesondere für industrielle Maschinen und Anlagen, ist es entscheidend, dass für den Anwender ein eindeutiger Bezug zwischen einem montierten physischen E/A-Modul und einem laut Planung vorgesehenen E/A-Modul erkennbar ist. Dies erleichtert dem Anwender einerseits die Verdrahtung, insbesondere mit weiteren Modulen wie Sensoren und Aktoren, und hilft andererseits, Fehler zu vermeiden.

KR20160074908A offenbart ein Verfahren, welches überwacht, dass elektronische Module richtig in einem Schaltschrank angeschlossen werden.

Besonders einfach ist ein Bezug zwischen einem montierten physischen E/A-Modul und einem laut Planung vorgesehenen E/A-Modul herstellbar bzw. erkennbar, wenn die in Reihe angeordneten physischen E/A-Module eine Reihenfolge aufweisen, die mit einer geplanten Reihenfolge übereinstimmt.

Wenn die geplante Reihenfolge für die E/A-Module sich beispielsweise aus der geplanten Steuerungslogik ergibt, sollte die physische Reihenfolge der montierten E/A-Module mit der logischen Reihenfolge der E/A-Module laut geplanter Steuerungslogik übereinstimmen. Dann ist für den Anwender ein eindeutiger Bezug zwischen der physischen und logischen Reihenfolge und somit ein Bezug zwischen einem montierten physischen E/A-Modul und einem laut Planung vorgesehenen E/A-Modul herstellbar bzw. erkennbar.

Üblicher Weise werden zur Bestimmung bzw. Überprüfung der Reihenfolge der E/A-Module zum Beispiel zusätzliche Kontakte vorgesehen, die eine automatische Zuordnung eines physischen E/A-Moduls zu einem E/A-Modul in der geplanten Steuerungslogik erlauben. "Automatisch" bedeutet dabei, dass eine Bestimmung bzw. Überprüfung der Reihenfolge in Abhängigkeit des Typs des E/A-Moduls erfolgt. Eine Reihenfolge wird dabei automatisch als korrekt erkannt, wenn an einer bestimmten Position ein E/A-Modul des vorgesehenen Typs montiert ist. Gibt es in der Reihe von E/A-Modulen jedoch mehrere des gleichen Typs, kann es vorkommen, dass die Reihenfolge fälschlicher Weise automatisch als korrekt erkannt wird, obwohl Module vertauscht wurden.

Alternativ kann die Zuordnung eines physischen E/A-Moduls zu einem E/A-Modul in der geplanten Steuerungslogik manuell über eindeutige Merkmale wie zum Beispiel Seriennummern oder MAC-Adressen vorgenommen werden. Oder die Zuordnung eines physischen E/A-Moduls zu einem E/A-Modul in der geplanten Steuerungslogik erfolgt derart, dass am physischen E/A-Modul manuell mittels Taster oder Schalter, zum Beispiel Dreh- oder DIP-Schalter (DIP = Dual in-line package), ein Kennzeichen gemäß der geplanten Steuerungslogik eingestellt wird.

Alle genannten Möglichkeiten haben jedoch den Nachteil, dass die richtige Reihenfolge der physischen E/A-Module bzw. ein eindeutiger Bezug zwischen der physischen und logischen Reihenfolge der E/A-Module für den Anwender nur umständlich und nicht direkt erkennbar bzw. überprüfbar ist. Dadurch kann es in der Folge schnell zu Fehlern bei der Verdrahtung kommen. Zum Beispiel kann es dann vorkommen, dass ein Notausschalter einen falschen Arbeitskreis frei- bzw. abschaltet, wenn eine Steuerungsanordnung mehrere gleiche Eingabe- und/oder Ausgabe-Module kombiniert.

Eine Aufgabe der vorliegenden Erfindung liegt somit darin, dem Anwender auf eine neue und einfache Weise ein Überprüfen einer Steuerungsanordnung, insbesondere in Form eines Soll-/Ist-Vergleichs, dahingehend zu ermöglichen, ob die in einer Reihe angeordneten physischen Reihenmodule, insbesondere E/A-Module, auch in der richtigen Reihenfolge angeordnet bzw. montiert sind.

Das Überprüfen kann zum Beispiel der Verifizierung und/oder der Validierung einer montierten Steuerungsanordnung dienen. Bei der Verifizierung (lateinisch veritas, "Wahrheit" und facere, "machen") wird geprüft, ob ein Produkt mit den spezifizierten bzw. geplanten Anforderungen übereinstimmt, während bei der Validierung (lateinisch validus, "kräftig", "wirksam", "fest") geprüft wird, ob ein Produkt die festgelegten Nutzungsziele des Anwenders erreicht.

Zur Lösung dieser Aufgabe schlägt die Erfindung eine Steuerungsanordnung eines Automatisierungssystems mit den Merkmalen des unabhängigen Patentanspruchs 1 sowie ein Prüfverfahren mit den Merkmalen des unabhängigen Patentanspruchs 8 vor. Weitere vorteilhafte Ausgestaltungen der erfindungsgemäßen Steuerungsanordnung sind in den abhängigen Patentansprüchen angegeben. Die zu der erfindungsgemäßen Steuerungsanordnung angegebenen Merkmale und Vorteile gelten sinngemäß auch für das erfindungsgemäße Verfahren.

Vorgeschlagen wird demnach eine Steuerungsanordnung eines Automatisierungssystems, mit wenigstens zwei Reihenmodulen, umfassend ein Prüfmodul sowie ein Steuerungs- und/oder Kommunikationsmodul und/oder ein E/A-Modul. Die Reihenmodule sind dabei in einer Reihe angeordnet und weisen eine Ist-Reihenfolge auf. Die Module stehen zudem untereinander in Signalverbindung. Ferner sind die Reihenmodule jeweils mit einem Indikatorelement ausgestattet, das zwei unterscheidbare Zustände einnehmen kann. Das Prüfmodul hat eine Soll-Reihenfolge für die in Reihe angeordneten Reihenmodule gespeichert und ist ausgebildet, entsprechend der Soll-Reihenfolge nacheinander an jedes der Reihenmodule ein Prüfsignal zu senden. Jedes der Indikatorelemente ist dabei ausgebildet, in Reaktion auf ein durch sein Reihenmodul empfangenes Prüfsignal seinen Zustand zu wechseln.

Zweckmäßiger Weise kommunizieren dabei alle Module gleichberechtigt untereinander, das heißt, es gibt keinen Master oder Slave. Außerdem ist zweckmäßiger Weise ein Indikatorelement ferner ausgebildet, in Reaktion darauf, dass durch sein Reihenmodul kein Prüfsignal mehr empfangen wird, wieder seinen Zu-stand zu wechseln. Beispielsweise kann der erste der zwei möglichen Zustände jedes der Indikatorelemente ein Ruhezustand und der zweite Zustand ein Aktivzustand sein oder umgekehrt.

Von Vorteil ist bei der erfindungsgemäße Steuerungsanordnung, dass für den Anwender, welcher weiß, dass die Reihenmodule nacheinander entsprechend der gespeicherten Soll-Reihenfolge ein Prüfsignal von dem Prüfmodul erhalten, nun leicht erkennbar ist, ob entlang der montierten Reihe von Reihenmodulen bei einem Reihenmodul nach dem anderen das Indikatorelement seinen Zustand unterscheidbar wechselt. Somit ist nun für den Anwender auch leicht überprüfbar, ob die Ist-Reihenfolge der montierten Reihenmodule mit der geplanten Soll-Reihenfolge der Reihenmodule übereinstimmt.

Besonders vorteilhaft ist, dass das Erkennen bzw. Überprüfen der richtigen Reihenfolge der Reihenmodule direkt an den physischen Reihenmodulen möglich ist und insbesondere jederzeit erfolgen kann, zum Beispiel vor, während und/oder nach der Inbetriebnahme der Steuerungsanordnung. Gegenüber dem Stand der Technik sind für diese Überprüfbarkeit der korrekten Reihenfolge keine zusätzliche Kontakte an den Reihenmodulen und insbesondere den E/A-Modulen erforderlich.

Gemäß einer Weiterbildung der Steuerungsanordnung ist zweckmäßig vorgesehen, dass das Indikatorelement, über welches jedes der Reihenmodule verfügt, zwei unterschiedliche visuell wahrnehmbare Zustände einnehmen kann und/oder eine LED (englisch light-emitting diode, "lichtemittierende Diode"), insbesondere eine Power-LED oder eine Bi-Color-LED, umfasst. Alternativ kann das Indikatorelement auch als ein Anzeigeelement auf einem Display, insbesondere einem Matrixdisplay, sein. Der Anwender kann also die Zustandswechsel der Indikatorelemente mit dem bloßen Auge erkennen und also die Überprüfung vornehmen, ob die Ist-Reihenfolge der montierten Reihenmodule mit der geplanten Soll-Reihenfolge der Reihenmodule übereinstimmt. Bei Übereinstimmung von Soll- und Ist-Reihenfolge der Reihenmodule, bewirken die visuell wahrnehmbaren Zustandswechsel der Indikatorelemente, welche entlang der montierten Reihe von Reihenmodulen bei einem Reihenmodul nach dem anderen auftreten, vorteilhafterweise einen mit einem Lauflicht vergleichbaren Effekt. Sollten aber die Ist-Reihenfolge der montierten Reihenmodule und die geplante Soll-Reihenfolge der Reihenmodule nicht übereinstimmen, wirkt sich dies störend auf den Lauflichteffekt aus, was für den Anwender leicht erkennbar ist.

Gemäß einer anderen Weiterbildung der Steuerungsanordnung ist vorgesehen, dass das Indikatorelement in einem ersten Zustand deaktiviert ist, also zum Beispiel nicht leuchtet, und in einem zweiten Zustand aktiviert ist, also zum Beispiel leuchtet, oder dass das Indikatorelement in einem ersten Zustand aktiviert ist, in einer ersten Helligkeit zu leuchten, und in einem zweiten Zustand aktiviert ist, in einer zweiten von der ersten unterschiedlichen Helligkeit zu leuchten, oder dass das Indikatorelement in einem ersten Zustand aktiviert ist, in einer ersten Farbe zu leuchten, und in einem zweiten Zustand aktiviert ist, in einer zweiten von der ersten unterschiedlichen Farbe zu leuchten. Jede der drei Varianten ist geeignet, den bereits erwähnten Lauflichteffekt zu bewirken, wobei Störungen bzw. Ungleichmäßigkeiten in der Bewegung des Lauflichts den Anwender auf ein Nichtübereinstimmen der Ist-Reihenfolge der montierten Reihenmodule mit der geplanten Soll-Reihenfolge der Reihenmodule hinweisen.

Das Steuerungsmodul kann als Software und/oder Hardware ausgebildet sein. Das Steuerungsmodul kann als eigenes Reihenmodul ausgebildet sein oder zusammen mit dem Kommunikationsmodul und oder/dem Prüfmodul als ein Reihenmodul ausgebildet sein. Das Steuerungsmodul kann auch zusammen mit einem E/A-Modul als ein Reihenmodul ausgebildet sein. Das Steuerungsmodul kann auch verteilt über mehrere Reihenmodule ausgebildet sein. Auch das Prüfmodul kann als Software und/oder Hardware ausgebildet sein. Das Prüfmodul kann als eigenes Reihenmodul ausgebildet sein oder zusammen mit dem Steuerungsmodul und/oder dem Kommunikationsmodul als ein Reihenmodul ausgebildet sein. Das Prüfmodul kann auch zusammen mit einem E/A-Modul als ein Reihenmodul ausgebildet sein. Das Prüfmodul kann auch verteilt über mehrere Reihenmodule ausgebildet sein. Das Kommunikationsmodul kann zum Beispiel als Buskoppler ausgebildet sein.

In einer anderen Weiterbildung der Steuerungsanordnung ist vorgesehen, dass das Prüfmodul von dem Steuerungs- und/oder Kommunikationsmodul umfasst ist, etwa als Funktionseinheit oder Funktionsblock, oder, dass das Prüfmodul von einem E/A-Modul umfasst ist, oder, dass das Prüfmodul von einer Konfigurationsvorrichtung umfasst ist, die mit dem Steuerungs- und/oder Kommunikationsmodul in Signalverbindung steht, etwa als Teil eines Engineering- oder Planungstools auf einem PC, oder, dass das Prüfmodul als ein separates Modul ausgebildet ist, das mit dem Steuerungs- und/oder Kommunikationsmodul in Signalverbindung steht, etwa als Applikation auf einem mobilen Laptop- oder Tablet-Computer.

In einer anderen Weiterbildung der Steuerungsanordnung ist vorgesehen, dass das Prüfmodul die Soll-Reihenfolge in Form eines Montageplans, eines Verdrahtungsplans oder einer geplanten Steuerungslogik gespeichert hat.

In einer anderen Weiterbildung der Steuerungsanordnung ist vorgesehen, dass das Prüfmodul ausgebildet ist, beim Senden der Prüfsignale an die Reihenmodule ein bestimmtes Muster anzuwenden. Zum Beispiel kann ein Prüfsignal eine bestimmte Dauer aufweisen, oder vor und/oder nach einem Prüfsignal kann eine Pause bestimmter Dauer eingefügt werden, oder es wird, während das eine Prüfsignal noch andauert, bereits das nächste Prüfsignal gesendet, so dass für eine bestimmte Dauer zwei Prüfsignale gleichzeitig gesendet werden.

Gemäß einer anderen Weiterbildung der Steuerungsanordnung ist vorgesehen, dass die Reihenmodule Befestigungsmittel zur Montage an einer Tragschiene und/oder Befestigungsmittel zur Montage an einer an einer Tragschiene montierten Komponente aufweisen. Die Befestigungsmittel erlauben eine einfache Montage der Module, indem sie zweckmäßig seitlich auf die Tragschiene aufgeschoben oder von vorne auf die Tragschiene aufgesteckt und arretiert werden können. Dabei kann die Tragschiene insbesondere als Hutschiene ausgebildet sein.

Vorgeschlagen wird außerdem ein Prüfverfahren für eine Steuerungsanordnung eines Automatisierungssystems wie zuvor beschrieben, mit wenigstens zwei Reihenmodulen, umfassend ein Prüfmodul sowie ein Steuerungs- und/oder Kommunikationsmodul und/oder ein E/A-Modul. Dabei sind die Reihenmodule in einer Reihe nacheinander angeordnet und weisen eine Ist-Reihenfolge auf. Ferner sind die Reihenmodule jeweils mit einem Indikatorelement ausgestattet, und das Prüfmodul hat eine Soll-Reihenfolge für die in Reihe angeordneten Reihenmodule gespeichert. Zudem stehen die Module untereinander in Signalverbindung. Bei dem Prüfverfahren nimmt zunächst jedes der Indikatorelemente einen ersten Zustand ein. Dann sendet das Prüfmodul nacheinander an jedes der Reihenmodule entsprechend der gespeicherten Soll-Reihenfolge ein Prüfsignal, wobei jeweils in Reaktion auf das Empfangen eines Prüfsignals durch eines der Reihenmodule dessen Indikatorelement einen von dem ersten Zustand unterscheidbaren zweiten Zustand einnimmt.

Zweckmäßiger Weise nimmt ein Indikatorelement wieder den ersten Zustand ein, wenn durch sein Reihenmodul kein Prüfsignal mehr empfangen wird.

Wie bereits erwähnt, kann das Senden der Prüfsignale an die Reihenmodule gemäß einem bestimmten Muster erfolgen. Zum Beispiel kann ein Prüfsignal eine bestimmte Dauer aufweisen, oder vor und/oder nach einem Prüfsignal kann eine Pause bestimmter Dauer eingefügt werden.

Diese und weitere Merkmale und Vorteile der vorliegenden Erfindung ergeben sich auch aus den Ausführungsbeispielen, welche nachfolgend unter Bezugnahme auf die beiliegenden Zeichnungen näher erläutert werden. Es zeigt dabei
- Fig. 1: eine schematische Darstellung einer Steuerungsanordnung eines Automatisierungssystems; und
- Fig. 2: eine schematische, tabellarische Darstellung der Ergebnisse verschiedener Abläufe von Prüfverfahren für die Steuerungsanordnung gemäß Fig. 1.

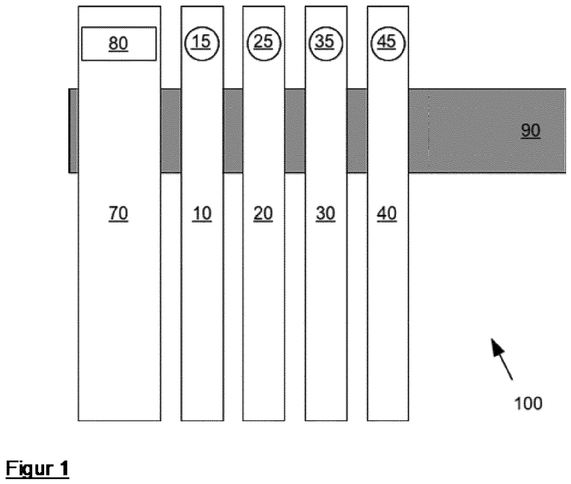

Ein Ausführungsbeispiel einer Steuerungsanordnung 100, welche auch als lokaler Steuerungsverbund bezeichnet werden kann, ist in Figur 1 gezeigt. Die Steuerungsanordnung 100 umfasst hierbei das Steuerungs- und/oder Kommunikationsmodul 70, das Prüfmodul 80 sowie vier E/A-Module 10, 20, 30 und 40.

Das Steuerungs- und/oder Kommunikationsmodul 70 fungiert hier sowohl als Steuerungsmodul (aus Gründen der Übersichtlichkeit nicht näher gezeigt), welches zum Beispiel als eine ein Anwenderprogramm ausführende SPS (Speicherprogrammierbare Steuerung) ausgebildet sein kann, als auch als Kommunikationsmodul (aus Gründen der Übersichtlichkeit nicht näher gezeigt), welches wenigstens eine Kommunikationsschnittstelle für die Steuerungsanordnung 100 bereitstellt, über welche die Steuerungsanordnung beispielsweise an ein Kommunikationsnetzwerk (aus Gründen der Übersichtlichkeit nicht näher gezeigt) des Automatisierungssystems gekoppelt sein kann, und wird daher im Folgenden als Steuerungs- und Kommunikationsmodul bezeichnet. Das Prüfmodul 80 ist hier von dem Steuerungs- und Kommunikationsmodul umfasst, etwa als Funktionsblock innerhalb des Anwenderprogramms.

Bei dieser Steuerungsanordnung 100 sind das Steuerungs- und Kommunikationsmodul 70 und das Prüfmodul 80 zusammen als ein Reihenmodul ausgebildet. Die vier E/A-Module 10 bis 40 bilden jeweils ein weiteres Reihenmodul.

Die E/A-Module 10, 20, 30 und 40 sind hier neben dem Steuerungs- und Kommunikationsmodul 70 in einer Reihe nacheinander bzw. nebeneinander angeordnet und weisen somit eine bestehende Ist-Reihenfolge auf. Jedes der E/A-Module besitzt ein Indikatorelement, das zwei unterscheidbare Zustände einnehmen kann: das E/A-Modul 10 besitzt das Indikatorelement 15; das E/A-Modul 20 besitzt das Indikatorelement 25; das E/A-Modul 30 besitzt das Indikatorelement 35 und das E/A-Modul 40 besitzt das Indikatorelement 45. Das Reihenelement mit dem Steuerungs- und Kommunikationsmodul und dem Prüfmodul besitzt hier kein Indikatorelement. Grundsätzlich könnte aber jedes Reihenmodul über ein Indikatorelement verfügen.

Das Steuerungs- und Kommunikationsmodul 70 sowie die E/A-Module 10 bis 40 sind hier in zweckmäßiger Ausführung auf einer als Hutschiene ausgebildeten Tragschiene 90 montiert. Dazu besitzen die Reihenmodule z.B. an ihrer Rückseite entsprechende Befestigungsmittel (aus Gründen der Übersichtlichkeit nicht näher gezeigt), die eine einfache Montage der Module an der Schiene, zum Beispiel durch Aufrasten oder - klemmen erlauben.

Jedes der E/A-Module 10 bis 40 ist mit dem Steuerungs- und Kommunikationsmodul 70 und damit auch mit dem Prüfmodul 80 signalleitend verbunden, indem die Module hier an einen Bus (aus Gründen der Übersichtlichkeit nicht näher gezeigt) angeschlossen sind. Bei dem Bus kann es sich zum Beispiel um einen Lokal-Bus handeln, welcher in der Tragschiene 90 aufgenommen ist.

In dem Prüfmodul 80 ist eine Soll-Reihenfolge für die in Reihe angeordneten E/A-Module 10 bis 40 gespeichert, hier einer geplanten Steuerungslogik, wobei das Prüfmodul ausgebildet ist, hier in Zusammenwirken mit dem Steuerungs- und Kommunikationsmodul 70, entsprechend der sich aus der geplanten Steuerungslogik ergebenden Soll-Reihenfolge der E/A-Module nacheinander an jedes der E/A-Module 10 bis 40 ein Prüfsignal zu senden. Das Reihenelement mit dem Steuerungs- und Kommunikationsmodul und dem Prüfmodul bleibt in diesem Beispiel bei der Überprüfung der Reihenfolge außer Betracht. Grundsätzlich könnte aber auch jedes Reihenmodul berücksichtigt und hinsichtlich der Übereinstimmung seiner Position in der Ist-Reihenfolge mit der geplanten Position laut Soll-Reihenfolge überprüft werden.

Jedes der Indikatorelemente 15 bis 45 ist ausgebildet, in Reaktion auf ein durch sein E/A-Modul empfangenes Prüfsignal des Prüfmoduls 80 seinen Zustand zu wechseln. Dabei weisen die Indikatorelementen 15 bis 45 zweckmäßig jeweils eine LED auf, die zwei unterschiedliche visuell wahrnehmbare Zustände einnehmen kann, wobei in einem ersten Zustand eines Indikatorelements dessen LED deaktiviert ist und also nicht leuchtet und in einem zweiten Zustand aktiviert ist, zu leuchten. Alternativ könnte die LED eines Indikatorelements in einem ersten Zustand aktiviert sein, in einer ersten Helligkeit zu leuchten, und in einem zweiten Zustand aktiviert sein, in einer zweiten von der ersten unterschiedlichen Helligkeit zu leuchten. Oder die LED eines Indikatorelements ist als Bi-Color-LED ausgebildet und könnte in einem ersten Zustand aktiviert sein, in einer ersten Farbe zu leuchten, und in einem zweiten Zustand aktiviert sein, in einer zweiten von der ersten unterschiedlichen Farbe zu leuchten, zum Beispiel rot und grün.

Bevorzugt sollten aber die Indikatorelemente 15 bis 45 gleichartig ausgebildet sein. Angemerkt sei noch, dass die Indikatorelemente 15 bis 45 zusätzlich auch für andere Zwecke als den erfindungsgemäßen Zweck ausgebildet sein können, beispielsweise um einen Betriebszustand des E/A-Moduls anzuzeigen.

In einem anderen als dem in Figur 1 gezeigten Ausführungsbeispiel einer Steuerungsanordnung könnten das Steuerungsmodul und das Prüfmodul über die vorhandenen Reihenmodule, insbesondere die vorhandenen E/A-Module, verteilt ausgebildet sein. Das heißt, die Steuerungslogik sowie die Prüflogik (einschließlich der Soll-Reihenfolge) sind ein verteilter Bestandteil in allen Reihenmodulen, insbesondere in allen Reihenmodulen, die E/A-Module umfassen. Dabei kann das Reihenmodul, welches das Kommunikationsmodul umfasst, als Buskoppler ausgebildet sein, über den die Steuerungsanordnung an ein Kommunikationsnetzwerk des Automatisierungssystems gekoppelt sein kann.

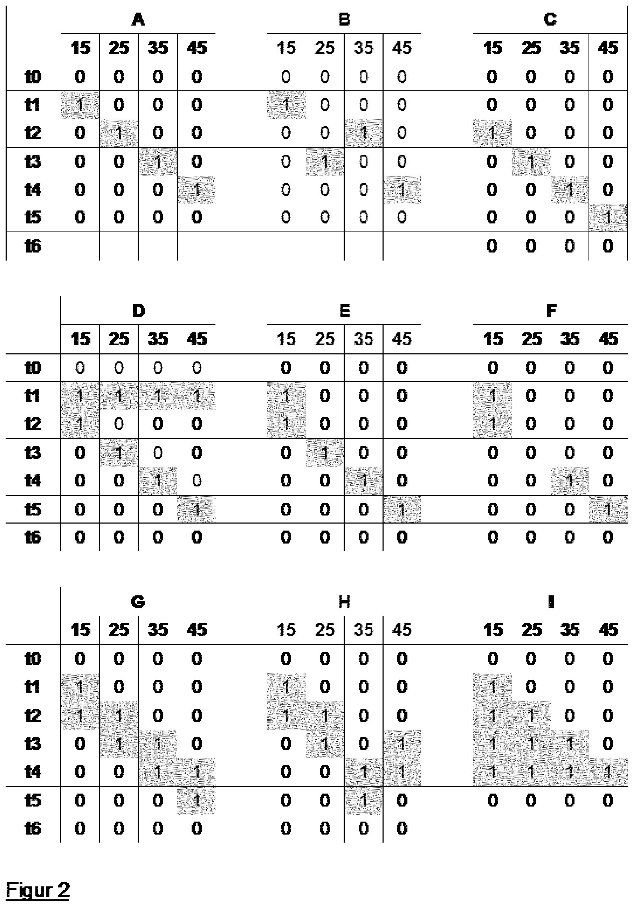

Figur 2 zeigt nun in tabellarischer Form die Ergebnisse neun verschiedener Abläufe von beispielhaften Prüfverfahren A bis I, welche für die Steuerungsanordnung 100 gemäß Figur 1 durchgeführt wurden. Dabei sind zu jedem Prüfverfahren A bis I die Zustände der Indikatorelemente 15 bis 45 der E/A-Module 10 bis 40 zu bestimmten Zeitpunkten t1 bis t5 während des Ablaufs des Prüfverfahrens angegeben, wobei von den zwei möglichen Zuständen eines Indikatorelements ein erster Zustand mit "0" und ein zweiter Zustand mit "1" symbolisiert ist. Wie bereits hinsichtlich Figur 1 erwähnt, umfassen die Indikatorelemente 15 bis 45 zweckmäßig je eine LED, wobei in diesem Beispiel der erste Zustand des Indikatorelements als ein Nichtleuchten der LED und der zweite Zustand als Aufleuchten der LED erkennbar ist.

Bei allen neun Prüfverfahren sind laut der im Prüfmodul 80 gespeicherten Soll-Reihenfolge z.B. vier E/A-Module vorgesehen, an die entsprechend der Soll-Reihenfolge nacheinander ein Prüfsignal gesendet wird.

Bei den Prüfverfahren A, C, D, E, G und I wurden unterschiedliche Muster angewandt, die später näher erläutert werden. Jedenfalls sind alle sechs Prüfverfahren erfolgreich abgelaufen, d.h. ohne erkennbare Fehler. Hingegen sind bei den Prüfverfahren B, F und H Fehler erkennbar, wobei im Fall B dasselbe Muster angewandt wurde wie im Fall A, im Fall F dasselbe Muster angewandt wurde wie im Fall E, und im Fall I dasselbe Muster angewandt wurde wie im Fall H.

Was im jeweiligen Prüfverfahren A bis I vom dem Anfangszeitpunkt t1 bis zum Endzeitpunkt t4 bzw. t5 passiert, soll nun im Einzelnen betrachtet werden. Dabei wird davon ausgegangen, dass sich die Indikatorelemente 15 bis 45 in einem ersten Zustand, welcher hier mit "0" symbolisiert ist, befinden, sofern sie kein Prüfsignal erhalten.

Im Prüfverfahren A sendet das Prüfmodul 80 nacheinander entsprechend der gespeicherten Soll-Reihenfolge der Reihenmodule an jedes als E/A-Modul ausgebildete Reihenmodul 10 bis 40 ein Prüfsignal. Das heißt: Zum Zeitpunkt t1 wird ein Prüfsignal an das laut Soll-Reihenfolge erste E/A-Modul gesendet, zum Zeitpunkt t2 wird ein Prüfsignal an das laut Soll-Reihenfolge zweite E/A-Modul gesendet, zum Zeitpunkt t3 wird ein Prüfsignal an das laut Soll-Reihenfolge dritte E/A-Modul gesendet und zum Zeitpunkt t4 wird ein Prüfsignal an das laut Soll-Reihenfolge erste E/A-Modul gesendet.

Aus der Tabelle geht hervor, dass zum Zeitpunkt t1 in Reaktion auf das Prüfsignal tatsächlich das Indikatorelement 15 des E/A-Moduls 10, welches in der Ist-Reihenfolge das erste ist, den zweiten Zustand, welcher hier mit "1" symbolisiert ist, eingenommen hat, während die übrigen Indikatorelemente 25 bis 45 ihren Zustand nicht gewechselt haben.

Zum Zeitpunkt t2 hat in Reaktion auf das Prüfsignal tatsächlich das Indikatorelement 25 des E/A-Moduls 20, welches in der Ist-Reihenfolge das zweite ist, den zweiten Zustand eingenommen, während die Indikatorelemente 35 und 45 ihren Zustand nicht gewechselt haben und das Indikatorelement 15 wieder den ersten Zustand eingenommen hat, da sein E/A-Modul kein Prüfsignal mehr empfangen hat.

Zum Zeitpunkt t3 hat in Reaktion auf das Prüfsignal tatsächlich das Indikatorelement 35 des E/A-Moduls 30, welches in der Ist-Reihenfolge das dritte ist, den zweiten Zustand eingenommen, während die Indikatorelemente 15 und 45 ihren Zustand nicht gewechselt haben und das Indikatorelement 25 wieder den ersten Zustand eingenommen hat, da sein E/A-Modul kein Prüfsignal mehr empfangen hat.

Zum Zeitpunkt t4 hat in Reaktion auf das Prüfsignal tatsächlich das Indikatorelement 45 des E/A-Moduls 40, welches in der Ist-Reihenfolge das vierte ist, den zweiten Zustand eingenommen, während die Indikatorelemente 15 und 25 ihren Zustand nicht gewechselt haben und das Indikatorelement 35 wieder den ersten Zustand eingenommen hat, da sein E/A-Modul kein Prüfsignal mehr empfangen hat. Das Prüfverfahren A hat also ergeben, dass die Soll-Reihenfolge und die Ist-Reihenfolge übereinstimmen.

Für den Anwender, der während des Prüfverfahrens die in einer Reihe angeordneten physischen E/A-Module 10 bis 40 betrachtet, ist die Übereinstimmung von Soll- und Ist-Reihenfolge anhand eines gleichmäßig entlang der in einer Reihe angeordneten physischen E/A-Module 10 bis 40 "wandernden" Lauflichts erkennbar, das heißt, zu jedem Zeitpunkt t1 bis t4 leuchtet nur eine LED und zwar entlang der in einer Reihe angeordneten physischen E/A-Module bei einem E/A-Modul nach dem anderen.

In der Tabelle für das Prüfverfahrens A ist dieses "wandernde" Lauflicht an der von einer Spalte zur nächsten Spalte "wandernden 1" im Verlauf vom Zeitpunkt t1 zum Zeitpunkt t4 erkennbar.

Zur besseren Veranschaulichung des Lauflichteffekts sind in den Tabellen der Figur 2 die Zellen, welche eine "1" enthalten, optisch hervorgehoben dargestellt.

Im Prüfverfahren B wird dasselbe Muster für das Senden der Prüfsignale angewandt wie im Prüfverfahren A, und die E/A-Module 10 bis 40 sind in derselben Ist-Reihenfolge montiert wie beim Prüfverfahren A. Jedoch ist in der Tabelle für das Prüfverfahren B erkennbar, dass im Verlauf vom Zeitpunkt t1 zum Zeitpunkt t4 die " 1" nicht von einer Spalte zur nächsten Spalte "wandert", sondern dass die " 1" z.B. eine Spalte überspringt, eine Spalte zurückspringt und wieder eine Spalte überspringt.

Für den Anwender, der während des Prüfverfahrens die in einer Reihe angeordneten physischen E/A-Module 10 bis 40 betrachtet, ist ein entsprechend hin und her "springendes" Licht bzw. ein "gestörtes" Lauflicht erkennbar, das heißt, zu jedem Zeitpunkt t1 bis t4 leuchtet zwar ebenfalls nur eine LED, jedoch nicht entlang der in einer Reihe angeordneten physischen E/A-Module bei einem E/A-Modul nach dem anderen, sondern vom ersten zum dritten zum zweiten zum vierten E/A-Modul in der Reihe.

Dies deutet auf das Vorliegen eines Fehlers bzw. einer Nichtübereinstimmung von Soll- und Ist-Reihenfolge der E/A-Module hin. Da aber die Ist-Reihenfolge gegenüber Fall A dieselbe ist, muss eine andere Soll-Reihenfolge für die E/A-Module zugrunde liegen. Zum Zeitpunkt t1 wird ein Prüfsignal an das laut Soll-Reihenfolge erste E/A-Modul gesendet, zum Zeitpunkt t2 wird ein Prüfsignal an das laut Soll-Reihenfolge zweite E/A-Modul gesendet, zum Zeitpunkt t3 wird ein Prüfsignal an das laut Soll-Reihenfolge dritte E/A-Modul gesendet und zum Zeitpunkt t4 wird ein Prüfsignal an das laut Soll-Reihenfolge erste E/A-Modul gesendet.

Zum Zeitpunkt t2 hat in Reaktion auf das Prüfsignal das Indikatorelement 35 des E/A-Moduls 30, welches in der Ist-Reihenfolge das dritte ist, den zweiten Zustand eingenommen. Und zum Zeitpunkt t3 hat in Reaktion auf das Prüfsignal das Indikatorelement 25 des E/A-Moduls 20, welches in der Ist-Reihenfolge das zweite ist, den zweiten Zustand eingenommen. Gemäß der im Prüfverfahren B zugrunde liegenden Soll-Reihenfolge ist also das E/A-Module 30 mit dem Indikatorelement 35 an zweiter Stelle und das E/A-Module 20 mit dem Indikatorelement 25 an dritter Stelle vorgesehen. Das heißt, in der Ist-Reihenfolge sind die E/A-Module 20 und 30 vertauscht angeordnet.

Das Prüfverfahren C entspricht weitgehend dem Prüfverfahren A, wobei das Muster für das Senden der Prüfsignale dahingehend abgewandelt ist, dass zum Zeitpunkt t1 noch pausiert wird und das erste Prüfsignal an das laut Soll-Reihenfolge erste E/A-Modul erst zum Zeitpunkt t2 gesendet wird. Dabei dient die Pause zum Zeitpunkt t1 der sicheren und einfachen Erkennung des ersten Moduls in der Reihenfolge. Ohne Pause könnten die Module auch zyklisch vertauscht sein, zum Modul 10 an Position 4 der Ist-Reihenfolge und damit Modul 20 an Position 1 der Ist-Reihenfolge, der Anwender würde dennoch ein Lauflicht sehen und den Fehler womöglich nicht bemerken.

Das Prüfverfahren D entspricht weitgehend dem Prüfverfahren C, wobei das Muster für das Senden der Prüfsignale dahingehend abgewandelt ist, dass zum Zeitpunkt t1 nicht pausiert wird sondern an jedes E/A-Modul ein Prüfsignal gesendet wird, wonach dann das erste Prüfsignal an das laut Soll-Reihenfolge erste E/A-Modul zum Zeitpunkt t2 gesendet wird. Dieses Muster hat den Vorteil, dass der Beginn des Prüfverfahrens deutlich erkennbar ist.

Für den Anwender, der während des Prüfverfahrens die in einer Reihe angeordneten physischen E/A-Module 10 bis 40 betrachtet, ist der Beginn des Prüfverfahrens als ein Aufleuchten aller LED der Indikatorelemente 15 bis 45 der E/A-Module 10 bis 40 erkennbar.

Das Prüfverfahren E entspricht weitgehend dem Prüfverfahren A, wobei das Muster für das Senden der Prüfsignale dahingehend abgewandelt ist, dass zum Zeitpunkt t2 nochmals ein Prüfsignal an das laut Soll-Reihenfolge erste E/A-Modul gesendet wird und erst zum Zeitpunkt t3 ein Prüfsignal an das laut Soll-Reihenfolge zweite E/A-Modul gesendet wird.

Dieses Muster hat den Vorteil, dass es an das laut Soll-Reihenfolge erste E/A-Modul ein Prüfsignal längerer Dauer sendet, als an die weiteren E/A-Module, so dass ein Indikatorelement, bei dem der zweite Zustand von längerer Dauer ist als bei den weiteren E/A-Modulen, deutlich als das laut Soll-Reihenfolge erste zu erkennen ist.

Für den Anwender, der während des Prüfverfahrens die in einer Reihe angeordneten physischen E/A-Module 10 bis 40 betrachtet, ist das laut Soll-Reihenfolge erste E/A-Modul ganz einfach daran zu erkennen, dass die LED dessen Indikatorelements, hier Indikatorelement 15, länger leuchtet als die LED der Indikatorelemente der übrigen E/A-Module. Dies ist besonders dann von Vorteil, wenn die Reihe von E/A-Modulen nur zwei Module umfasst.

Im Prüfverfahren F wird dasselbe Muster für das Senden der Prüfsignale angewandt wie im Prüfverfahren E, und die E/A-Module 10 bis 40 sind in derselben Ist-Reihenfolge montiert wie beim Prüfverfahren E. Jedoch ist in der Tabelle für das Prüfverfahren F erkennbar, dass in der Spalte für das Indikatorelement 25 zu keinem Zeitpunkt eine "1" eingetragen ist. Stattdessen ist zum Zeitpunkt t3, zu dem das Prüfmodul 80 ein Prüfsignal das das laut gespeicherter Soll-Reihenfolge zweite E/A-Modul, in der Spalte für das Indikatorelement 25 eine "0" eingetragen.

Für den Anwender, der die in einer Reihe angeordneten physischen E/A-Module 10 bis 40 betrachtet, ist ein mit einer Verzögerung vom Indikatorelement 15 des E/A-Moduls 10 zum Indikatorelement 35 des E/A-Moduls 35 "springendes" Licht bzw. ein "gestörtes" Lauflicht erkennbar.

Dies deutet auf das Vorliegen eines Fehlers und insbesondere auf ein fehlerhaftes oder fehlerhaft angeschlossenes E/-A-Modul 20 hin.

Das Prüfverfahren G entspricht weitgehend dem Prüfverfahren A, wobei das Muster für das Senden der Prüfsignale dahingehend abgewandelt ist, dass zum Zeitpunkt t2 nicht nur ein Prüfsignal an das laut Soll-Reihenfolge zweite E/A-Modul gesendet wird sondern auch nochmals ein Prüfsignal an das laut Soll-Reihenfolge erste E/A-Modul gesendet wird. Zum Zeitpunkt t3 wird nicht nur ein Prüfsignal an das laut Soll-Reihenfolge dritte E/A-Modul gesendet, sondern auch nochmals ein Prüfsignal an das laut Soll-Reihenfolge zweite E/A-Modul. Zum Zeitpunkt t4 wird nicht nur ein Prüfsignal an das laut Soll-Reihenfolge vierte E/A-Modul gesendet, sondern auch nochmals ein Prüfsignal an das laut Soll-Reihenfolge dritte E/A-Modul. Zum Zeitpunkt t5 wird dann nochmals ein Prüfsignal allein an das laut Soll-Reihenfolge vierte E/A-Modul gesendet.

Ein solches Muster hat den Vorteil, dass an jedes E/A-Modul ein Prüfsignal längerer Dauer gesendet wird, wobei das Senden des nächsten Prüfsignals für das laut Soll-Reihenfolge nächste E/A-Modul bereits begonnen wird, obwohl das Senden des vorherigen Prüfsignals noch nicht beendet wurde. Dadurch sind die laut Soll-Reihenfolge geplanten Vorgänger- und Nachfolger-E/A-Module eines E/A-Moduls besser erkennbar.

Für den Anwender, der während des Prüfverfahrens die in einer Reihe angeordneten physischen E/A-Module 10 bis 40 betrachtet, ist die Übereinstimmung von Soll- und Ist-Reihenfolge anhand eines gleichmäßig entlang der in einer Reihe angeordneten physischen E/A-Module 10 bis 40 "wandernden" doppelten Lauflichts oder balkenförmigen Lauflichts erkennbar.

Das Muster für das Senden der Prüfsignale könnte basierend auf dem Muster von Prüfverfahren E nochmals abgewandelt werden, damit die laut Soll-Reihenfolge geplanten Vorgänger- und Nachfolger-E/A-Module eines E/A-Moduls noch besser erkennbar sind. Möglich wird dies, wenn das Senden eines Prüfsignals für E/A-Modul bereits begonnen wird, bevor das Senden des vorherigen Prüfsignals für das laut Soll-Reihenfolge vorherige E/A-Modul endet und erst beendet wird, wenn das Senden des nächsten Prüfsignals für das laut Soll-Reihenfolge nächste E/A-Modul bereits begonnen hat. Ein Prüfverfahren unter Anwendung dieses Musters ist in Figur 2 jedoch nicht gezeigt.

Im Prüfverfahren H wird dasselbe Muster für das Senden der Prüfsignale angewandt wie im Prüfverfahren G, und die E/A-Module 10 bis 40 sind in derselben Ist-Reihenfolge montiert wie beim Prüfverfahren G. Jedoch ist in der Tabelle für das Prüfverfahren H erkennbar, dass im Verlauf vom Zeitpunkt t1 zum Zeitpunkt t4 die " 1" nicht von einer Spalte zur nächsten Spalte "wandert", sondern dass die " 1" eine Spalte überspringt und dann eine Spalte zurückspringt.

Für den Anwender, der die in einer Reihe angeordneten physischen E/A-Module 10 bis 40 betrachtet, ist ein entsprechend "springendes" Licht bzw. ein "gestörter" Lauflicht erkennbar. Vor allem ist ein sich vorübergehend trennendes doppeltes Lauflicht oder ein sich vorübergehend trennendes balkenförmiges Lauflicht erkennbar.

Dies deutet auf das Vorliegen eines Fehlers bzw. einer Nichtübereinstimmung von Soll- und Ist-Reihenfolge der E/A-Module hin. Da die Ist-Reihenfolge gegenüber Fall E dieselbe ist, muss eine andere Soll-Reihenfolge für die E/A-Module zugrunde liegen.

Zum Zeitpunkt t3 wird erstmals ein Prüfsignal an das laut Soll-Reihenfolge dritte E/A-Modul gesendet und wird nochmals ein Prüfsignal an das laut Soll-Reihenfolge zweite E/A-Modul gesendet. Zum Zeitpunkt t4 wird erstmals ein Prüfsignal an das laut Soll-Reihenfolge vierte E/A-Modul gesendet und wird nochmals ein Prüfsignal an das laut Soll-Reihenfolge dritte E/A-Modul. Zum Zeitpunkt t5 wird dann nochmals ein Prüfsignal allein an das laut Soll-Reihenfolge vierte E/A-Modul gesendet.

Zum Zeitpunkt t3 hat in Reaktion auf das Prüfsignal für das laut Soll-Reihenfolge dritte E/A-Modul das Indikatorelement 45 des E/A-Moduls 40, welches in der Ist-Reihenfolge das vierte ist, den zweiten Zustand eingenommen. Zum Zeitpunkt t4 hat in Reaktion auf das Prüfsignal für das laut Soll-Reihenfolge vierte E/A-Modul das Indikatorelement 35 des E/A-Moduls 30, welches in der Ist-Reihenfolge das dritte ist, den zweiten Zustand eingenommen.

Gemäß der im Prüfverfahren F zugrunde liegenden Soll-Reihenfolge ist also das E/A-Module 40 mit dem Indikatorelement 45 an dritter Stelle und das E/A-Module 30 mit dem Indikatorelement 35 an vierter Stelle vorgesehen. Das heißt, in der Ist-Reihenfolge sind die E/A-Module 30 und 40 vertauscht angeordnet.

Das Prüfverfahren I entspricht weitgehend dem Prüfverfahren A, wobei das Muster für das Senden der Prüfsignale dahingehend abgewandelt ist, dass zum Zeitpunkt t2 nicht nur ein Prüfsignal an das laut Soll-Reihenfolge zweite E/A-Modul gesendet wird sondern auch nochmals ein Prüfsignal an das laut Soll-Reihenfolge erste E/A-Modul gesendet wird. Zum Zeitpunkt t3 wird nicht nur ein Prüfsignal an das laut Soll-Reihenfolge dritte E/A-Modul gesendet, sondern auch nochmals ein Prüfsignal an das laut Soll-Reihenfolge zweite und erste E/A-Modul. Zum Zeitpunkt t4 wird nicht nur ein Prüfsignal an das laut Soll-Reihenfolge vierte E/A-Modul gesendet, sondern auch nochmals ein Prüfsignal an das laut Soll-Reihenfolge dritte, zweite und erste E/A-Modul. Immer wenn ein Prüfsignal an das laut Soll-Reihenfolge nächste E/A-Modul gesendet wird, erhalten also auch alle laut Soll-Reihenfolge vorhergehenden E/A-Module weiterhin ein Prüfsignal.

Dieses Muster kann als Alternative zum Muster gemäß Prüfverfahren G und H gesehen werden und bietet ebenfalls die Vorteile, dass der zweite Zustand der Indikatorelemente länger andauert und die laut Soll-Reihenfolge geplanten Vorgänger- und Nachfolger-E/A-Module eines E/A-Moduls besser erkennbar sind.

Für den Anwender, der während des Prüfverfahrens die in einer Reihe angeordneten physischen E/A-Module 10 bis 40 betrachtet, ist die Übereinstimmung von Soll- und Ist-Reihenfolge anhand eines gleichmäßig entlang der in einer Reihe angeordneten physischen E/A-Module 10 bis 40 immer länger werdenden "Lichtbalkens" erkennbar, der sich zum Ende des Prüfverfahrens hin, hier also zum Zeitpunkt t4, über alle E/A-Module erstreckt.

Aus der vorliegenden Beschreibung der Erfindung und der beispielhaften Ausführungsformen ist für eine fachkundige Person ersichtlich, dass viele weitere Varianten zum Erzeugen und Anwenden eines Lauflichteffekts möglich sind.

In einem anderen als den in den Figur 2 gezeigten Ausführungsbeispiel kann das Prüfmodul über die vorhandenen Reihenmodule, insbesondere die vorhandenen E/A-Module, verteilt ausgebildet sein, und die Prüflogik einschließlich der Soll-Reihenfolge kann ein verteilter Bestandteil in allen Reihenmodulen, insbesondere in allen Reihenmodulen, die E/A-Module umfassen, sein. Dabei kann die Prüflogik derart ausgebildet sein, dass die Reihenmodule sich zunächst auf eine gemeinsame Zeitbasis einigen. Anschließend steuert zum Zeitpunkt t1 dasjenige physische Reihenmodul sein Indikatorelement mit einem Prüfsignal an, das laut Soll-Reihenfolge das erste sein soll. Dann steuert zum Zeitpunkt t2 dasjenige physische Reihenmodul sein Indikatorelement mit einem Prüfsignal an, das laut Soll-Reihenfolge das zweite sein soll usw. Für den Anwender ist dann wieder anhand eines "wandernden" oder "springenden" Lauflichts über die Indikatorelemente der Reihenmodule erkennbar, ob die Ist-Reihenfolge der physischen Reihenmodule korrekt ist, das heißt mit der Soll-Reihenfolge übereinstimmt, oder nicht.

### Bezugszeichenliste

- 10, 20, 30, 40: E/A-Modul
- 15, 25, 35, 45: Indikatorelement
- 70: Steuerungs- und/oder Kommunikationsmodul
- 80: Prüfmodul
- 90: Tragschiene, Hutschiene, ggf. mit Lokal-Bus-Topologie
- 100: Steuerungsanordnung

## Patentansprüche

1. Steuerungsanordnung (100) eines Automatisierungssystems, mit wenigstens zwei Reihenmodulen, die in einer Reihe nacheinander angeordnet sind und eine Ist-Reihenfolge aufweisen, umfassend
ein Steuerungs- und/oder Kommunikationsmodul (70) und/oder
ein E/A-Modul (10, 20, 30, 40),
sowie ein Prüfmodul (80),
wobei die Module untereinander
in Signalverbindung stehen und wobei die wenigstens zwei Reihenmodule jeweils mit einem Indikatorelement (15, 25, 35, 45) ausgestattet sind, das zwei unterscheidbare Zustände einnehmen kann,
wobei das Prüfmodul eine Soll-Reihenfolge für die in Reihe angeordneten Reihenmodule gespeichert hat,
**dadurch gekennzeichnet, dass**
das Prüfmodul ausgebildet ist, entsprechend der Soll-Reihenfolge nacheinander an jedes der Reihenmodule ein Prüfsignal zu senden,
wobei jedes der Indikatorelemente ausgebildet ist, in Reaktion auf ein durch sein Hardware-Modul empfangenes Prüfsignal seinen Zustand zu wechseln und bei Übereinstimmung von Soll- und Ist-Reihenfolge der Reihenmodule, die Zustandswechsel der Indikatorelemente einen Lauflichteffekt bewirken.

2. Steuerungsanordnung nach dem vorherigen Anspruch,
wobei das Indikatorelement zwei unterschiedliche visuell wahrnehmbare Zustände einnehmen kann und/oder eine LED, insbesondere eine Power-LED oder Bi-Color-LED, umfasst.

3. Steuerungsanordnung nach einem der vorherigen Ansprüche,
wobei das Indikatorelement in einem ersten Zustand deaktiviert ist, und in einem zweiten Zustand aktiviert ist, insbesondere aktiviert zu leuchten, oder
wobei das Indikatorelement in einem ersten Zustand aktiviert ist, in einer ersten Helligkeit zu leuchten, und in einem zweiten Zustand aktiviert ist, in einer zweiten von der ersten unterschiedlichen Helligkeit zu leuchten, oder
wobei das Indikatorelement in einem ersten Zustand aktiviert ist, in einer ersten Farbe zu leuchten, und in einem zweiten Zustand aktiviert ist, in einer zweiten von der ersten unterschiedlichen Farbe zu leuchten.

4. Steuerungsanordnung nach einem der vorherigen Ansprüche,
wobei das Prüfmodul
- von dem Steuerungs- und/oder Kommunikationsmodul umfasst ist oder,
- von wenigstens einem E/A-Modul umfasst ist.

5. Steuerungsanordnung nach einem der vorherigen Ansprüche,
wobei das Prüfmodul die Soll-Reihenfolge in Form eines Montageplans, eines Verdrahtungsplans oder einer geplanten Steuerungslogik gespeichert hat.

6. Steuerungsanordnung nach einem der vorherigen Ansprüche,
wobei das Prüfmodul ausgebildet ist, beim Senden der Prüfsignale an die Reihenmodule ein bestimmtes Muster anzuwenden.

7. Steuerungsanordnung nach einem der vorherigen Ansprüche,
wobei die Reihenmodule Befestigungsmittel zur Montage an einer Tragschiene (90) und/oder Befestigungsmittel zur Montage an einer an einer Tragschiene montierten Komponente aufweisen.

8. Prüfverfahren für eine Steuerungsanordnung (100) eines Automatisierungssystems gemäß Anspruch 1 mit wenigstens zwei Reihenmodulen, die in einer Reihe nacheinander angeordnet sind und eine Ist-Reihenfolge aufweisen und jeweils mit einem Indikatorelement (15, 25, 35, 45) ausgestattet sind, umfassend ein Steuerungs- und/oder Kommunikationsmodul (70) und/oder ein E/A-Modul (10, 20, 30, 40), ,
sowie ein Prüfmodul (80), das eine Soll-Reihenfolge für die in Reihe angeordneten Reihenmodule gespeichert hat,
wobei die Module untereinander in Signalverbindung stehen,
wobei zunächst jedes der Indikatorelemente einen ersten Zustand einnimmt,
**dadurch gekennzeichnet, dass**
das Prüfmodul dann nacheinander an jedes der Reihenmodule entsprechend der gespeicherten Soll-Reihenfolge ein Prüfsignal sendet, wobei jeweils in Reaktion auf das Empfangen eines Prüfsignals durch eines der Reihenmodule dessen Indikatorelement einen von dem ersten Zustand unterscheidbaren zweiten Zustand einnimmt und bei Übereinstimmung von Soll- und Ist-Reihenfolge der Reihenmodule, durch die Zustandswechsel der Indikatorelemente ein Lauflichteffekt bewirkt wird.

## Claims

1. Control assembly (100) of an automation system, having at least two row modules which are arranged one after the other in a row and have an actual order, comprising a control and/or communication module (70) and/or
an I/O module (10, 20, 30, 40),
and a test module (80), wherein the modules are connected to one another via signals and wherein the at least two row modules are each equipped with an indicator element (15, 25. 35, 45) which can assume two distinguishable states,
wherein the test module has stored a target order for the row modules arranged in row,
**characterized in that**
the test module is designed to send a test signal to each of the row modules one after the other in accordance with the target order,
wherein each of the indicator elements is adapted to change its state in response to a test signal received by its hardware module and when the target and the actual order of the row modules match, the state changes of the indicator elements cause a running light effect.

2. Control assembly according to the previous claim,
wherein the indicator element can assume two different visually perceivable states and/or comprises an LED, in particular a power LED or bi-color LED.

3. Control assembly according to any of the preceding claims,
wherein the indicator element is deactivated in a first state and is activated in a second state, in particular activated to illuminate, or
wherein the indicator element is activated in a first state to illuminate in a first brightness and is activated in a second state to illuminate in a second brightness different from the first brightness. or
wherein the indicator element is activated in a first state to illuminate in a first color and is activated in a second state to illuminate in a second color different from the first color.

4. Control assembly according to any of the preceding claims,
wherein the test module
- is comprised by the control and/or communication module or.
- is comprised of at least one I/O module.

5. Control assembly according to any one of the preceding claims,
wherein the test module has stored the target order in the form of an installation plan, a wiring plan or a planned control logic.

6. Control assembly according to any one of the preceding claims.
wherein the test module is designed to apply a certain pattern when sending the test signals to the row modules.

7. Control assembly according to any one of the preceding claims,
wherein the row modules comprise fastening means for mounting on a mounting rail (90) and/or fastening means for mounting on a component mounted on a mounting rail (90).

8. Test method for a control assembly (100) of an automation system according to claim 1. comprising at least two row modules arranged in a row one after the other and having an actual order, and each equipped with an indicator element (15, 25, 35, 45) comprising a control
and/or communication module (70) and/or
an I/O module (10, 20, 30, 40),
and a test module (80) which has stored a target order for the row modules arranged in a row, whereby the modules are connected to one another via signals,
wherein initially each of the indicator elements assumes a first state.
**characterized in that**
the test module then successively sends a test signal to each of the row modules according to the stored target order, whereby in each case in response to the reception of a test signal by one of the row modules its indicator element assumes a second state distinguishable from the first state and when the target and actual order of the row modules correspond, a running light effect is caused by the change of state of the indicator elements.

## Revendications

1. Ensemble de commande (100) d'un système d'automatisation, avec au moins deux modules alignés qui sont agencés dans une rangée l'un après l'autre et présentent un ordre réel, comprenant
un module de commande et/ou de communication (70) et/ou
un module E/S (10, 20, 30, 40),
ainsi qu'un module de contrôle (80),
dans lequel les modules sont en liaison de signal entre eux et dans lequel les au moins deux modules alignés sont équipés respectivement d'un élément indicateur (15, 25, 35, 45) qui peut occuper deux états pouvant être différenciés,
dans lequel le module de contrôle a enregistré un ordre de consigne pour les modules alignés agencés en rangée,
**caractérisé en ce que**
le module de contrôle est réalisé afin d'envoyer selon l'ordre de consigne l'un après l'autre à chacun des modules alignés un signal de contrôle,
dans lequel chacun des éléments indicateurs est réalisé afin de changer son état en réaction à un signal de contrôle reçu par son module matériel
et lors de la concordance de l'ordre de consigne et réel des modules alignés, les changements d'état des éléments indicateurs provoquent un effet de chenillard.

2. Ensemble de commande selon la revendication précédente,
dans lequel l'élément indicateur peut occuper deux états différents visuellement perceptibles et/ou comporte une DEL, en particulier une DEL de puissance ou une DEL Bi-Color.

3. Ensemble de commande selon l'une des revendications précédentes,
dans lequel l'élément indicateur est désactivé dans un premier état, et est activé dans un deuxième état, en particulier activé pour éclairer, ou
dans lequel l'élément indicateur est activé dans un premier état afin d'éclairer dans une première luminosité, et est activé dans un deuxième état afin d'éclairer dans une deuxième luminosité différente de la première, ou
dans lequel l'élément indicateur est activé dans un premier état afin d'éclairer dans une première couleur, et est activé dans un deuxième état afin d'éclairer dans une deuxième couleur différente de la première.

4. Ensemble de commande selon l'une des revendications précédentes,
dans lequel le module de contrôle
- est compris par le module de commande et/ou de communication ou,
- est compris par au moins un module E/S,

5. Ensemble de commande selon l'une des revendications précédentes,
dans lequel le module de contrôle a enregistré l'ordre de consigne sous la forme d'un plan de montage, d'un plan de câblage ou d'une logique de commande planifiée.

6. Ensemble de commande selon l'une des revendications précédentes,
dans lequel le module de contrôle est réalisé afin d'appliquer un modèle déterminé lors de l'envoi des signaux de contrôle aux modules alignés.

7. Ensemble de commande selon l'une des revendications précédentes,
dans lequel les modules alignés présentent des moyens de fixation pour le montage au niveau d'un rail porteur (90) et/ou des moyens de fixation pour le montage au niveau d'un composant monté au niveau d'un rail porteur.

8. Procédé de contrôle pour un ensemble de commande (100) d'un système d'automatisation selon la revendication 1 avec au moins deux modules alignés qui sont agencés l'un après l'autre dans une rangée et présentent un ordre réel et sont équipés respectivement d'un élément indicateur (15, 25, 35, 45), comprenant
un module de commande et/ou de communication (70) et/ou
un module E/S (10, 20, 30, 40),
ainsi qu'un module de contrôle (80) qui a enregistré un ordre de consigne pour les modules alignés agencés en rangée,
dans lequel les modules sont en liaison de signal entre eux,
dans lequel tout d'abord chacun des éléments indicateurs occupe un premier état,
**caractérisé en ce que**
le module de contrôle envoie ensuite l'un après l'autre à chacun des modules alignés selon l'ordre de consigne enregistré un signal de contrôle, dans lequel respectivement en réaction à la réception d'un signal de contrôle par un des modules alignés son élément indicateur occupe un deuxième état pouvant être différencié du premier état
et lors de la concordance de l'ordre de consigne et réel des modules alignés, un effet de chenillard est provoqué par les changements d'état des éléments indicateurs.
